# FASCICULE DE BREVET EUROPEEN

(11) **EP 4 083 395 B1**
(45) Date de publication et mention de la délivrance du brevet: **12.06.2024**
(21) Numéro de dépôt: 22168834.4
(22) Date de dépôt: 19.04.2022
(51) Int. Cl.: F01N 3/023, F01N 9/00

(54) **PROCÉDÉ DE COMMANDE D'UN GROUPE MOTOPROPULSEUR HYBRIDE POUR LA RÉGÉNÉRATION D'UN FILTRE À PARTICULES PAR MODULATION DU DÉBIT D'AIR ADMIS**
VERFAHREN ZUR STEUERUNG EINES HYBRIDANTRIEBS ZUR REGENERATION EINES PARTIKELFILTERS DURCH MODULATION DES ANSAUGLUFTSTROMS
METHOD FOR CONTROLLING A HYBRID POWER TRAIN FOR REGENERATING A PARTICLE FILTER BY MODULATION OF THE AIR FLOW ADMITTED

(30) Priorité: 26.04.2021 FR 2104323
(43) Date de publication de la demande: 02.11.2022
(73) Titulaire: NEW H POWERTRAIN HOLDING, S.L.U., 47008 Valladolid (ES)
(72) Inventeur: KEITA, Alexandre-Mamady, 78084 Guyancourt (FR); PEREIRA, LUC, 78084 Guyancourt (FR)
(74) Mandataire: Renault Group

(56) Documents cités:
- WO-A1-2020/000010
- DE-A1-102013 202 142
- DE-A1-102018 217 169

## Description

### Domaine technique

L'invention a pour domaine technique le contrôle d'un groupe motopropulseur en phase de dépollution, et plus particulièrement le contrôle d'un groupe motopropulseur hybride.

### Techniques antérieures

L'introduction du filtre à particules (Gasoline Particulate Filter-GPF) pour les motorisations à allumage commandé (moteur fonctionnant notamment à l'essence, seul ou dans une motorisation hybride en association avec une machine électrique) devient une nécessité sur les véhicules automobiles afin de respecter les dernières normes antipollution concernant l'émission des particules fines (PM).

Le filtre à particules GPF, qui est un élément du dispositif de post-traitement du moteur, fonctionne de manière séquentielle.

Pendant le fonctionnement habituel du moteur généralement à richesse 1 (i.e. mélange air-carburant dans les proportions stoechiométriques), il a pour objectif de piéger les particules fines issues des processus de combustion.

Le filtre à particules GPF a ensuite besoin d'être régénéré (c'est-à-dire vidé des particules accumulées) lorsque la masse de particules fines devient importante dans le but de diminuer la contre-pression à l'échappement. Cette purge peut se produire quand le moteur passe dans un autre mode de fonctionnement (voir par exemple le document DE102018217169A1).

Sur les motorisations conventionnelles à essence, deux méthodes de régénération du filtre à particules GPF sont principalement utilisées :
a) Une première méthode de régénération est dite « passive », car elle n'est pas provoquée par un déréglage volontaire du moteur. Il s'agit d'une régénération qui a lieu spontanément, indépendamment de la surveillance de la masse de particules fines accumulées, pendant les phases dites de « levé de pied ». On entend par « levé de pied » le fait que le conducteur relâche complètement la pédale d'accélérateur du véhicule, ce que le calculateur du moteur traduit par une consigne de couple moteur nulle. Lors des levés de pied, le calculateur procède alors à la coupure de l'injection de carburant. Il se produit à l'échappement du moteur un apport d'air pur (donc : apport d'oxygène 21%). Lorsque la température est suffisante pour une régénération, les particules fines accumulées dans le filtre à particules GPF sont brûlées grâce à l'oxygène apporté.
b) Une deuxième méthode de régénération est dite « active » : il s'agit d'un mode spécifique de réglage du moteur qui est provoqué en modifiant volontairement le mode de combustion du moteur. On surveille en permanence la masse de particules fines accumulées dans le filtre à particules GPF, en fonction du débit des gaz d'échappement traversant le filtre à particules GPF et d'une valeur de la pression différentielle à ses bornes. Lorsque la masse accumulée atteint un seuil prédéfini, le calculateur bascule le fonctionnement du moteur en mélange pauvre, par exemple à une valeur de richesse de l'ordre de 0,9 à 0,95. Un apport d'oxygène jusqu'à 2-3% permet de réaliser la combustion des particules dans le filtre à particules GPF.

En général ce mode de régénération actif est utilisé en complément du mode de régénération passif décrit au-dessus. Plus précisément, il sert à éviter le colmatage du filtre si les phases de régénération passive ne sont pas assez fréquentes pour le vider suffisamment.

Ce mode de régénération actif est très émissif en oxydes d'azote (NOx) et pourrait devoir être abandonné dans un avenir proche à cause de la sévérité croissante des normes antipollution.

Pour régénérer un GPF contenant des particules fines, il est nécessaire de disposer d'une quantité d'oxygène et d'une température appropriées.

La régénération du filtre à particules GPF requiert également une attention particulière à cause de la fragilité du substrat (plus fragile que son homologue pour moteurs diesel « Diesel Particulate Filter » ou DPF), et donc l'augmentation de la température à l'intérieur du filtre à particules GPF qui a lieu pendant la combustion des particules est à surveiller. Cette augmentation de température doit être bien contrôlée pour éviter une fissuration, voire une destruction pendant les phases de régénération.

Sur les motorisations hybrides comprenant un moteur thermique et au moins une machine électrique, il est tout à fait envisageable d'appliquer la régénération en levé de pied mais avec beaucoup plus de contraintes liées à la gestion de l'énergie. Sur les motorisations hybrides en général, pendant les phases de levé de pied, on a parfois intérêt à ne pas entraîner du tout le moteur thermique en utilisant la machine électrique et à le laisser désaccouplé de la chaîne de transmission du véhicule. Il n'y a alors pas de circulation d'air à l'échappement du moteur. De façon générale, les occurrences de régénération passive du filtre à particules GPF sont plus faibles.

D'autre part, pendant ces phases où aucune combustion n'a lieu dans le moteur, le filtre à particules GPF se refroidit, ce qui est défavorable à une régénération ultérieure du filtre à particules GPF.

Ce manque de régénération pourrait, si aucun mode de régénération active n'était prévu, entraîner à la longue le colmatage du filtre à particules GPF et une prise en charge en après-vente.

On connaît de l'état de la technique un mode de régénération actif, mis en oeuvre lorsque la masse de particules atteint un seuil, qui permet d'éviter un colmatage tout en maîtrisant la température dans le filtre de manière qu'il ne soit pas endommagé et en limitant la quantité d'oxydes d'azote NOx produits.

Dans ce procédé connu, la régénération proprement dite du filtre à particules GPF est effectuée en pilotant le moteur thermique en mode de « pompe à air » (moteur thermique tournant sans injection de carburant, à une vitesse de rotation cible donnée, et découplé des roues). En outre la position d'une vanne de réglage de débit d'air du moteur (boîtier-papillon) est réglée sur une position angulaire d'ouverture fixe, de sorte que, en combinaison avec une vitesse de rotation fixe, le débit d'air envoyé à l'échappement du moteur est constant.

La traction du véhicule est assurée par une machine électrique jusqu'à la fin du processus de régénération du filtre à particules GPF. Il est donc nécessaire d'avoir un état de charge de la batterie assez élevé pour assurer la traction du véhicule pendant toute la phase de régénération du filtre à particules GPF.

La mise en oeuvre de ce mode de régénération (moteur thermique en mode de pompe à air et pas d'injection de carburant) pour les motorisations hybrides nécessite un contrôle de la température observée lors de la régénération. Une consigne de débit d'air fixe et importante est favorable à la combustion des particules, mais elle est aussi problématique car elle peut forcer à interrompre la régénération au bout de quelques secondes seulement après le démarrage de la combustion des particules en cas de dépassement de la température maximale autorisée dans le filtre à particules GPF qui permette d'assurer sa tenue thermomécanique. Il faudra attendre plusieurs secondes voire plusieurs minutes pour relancer le processus de régénération à nouveau. Compte tenu de la courte durée de régénération avec ce mode, on prévoit dans le procédé de l'état de la technique plusieurs séquences de régénération afin de diminuer d'une manière significative la masse de particules fines dans le filtre à particules GPF. Entre chaque séquence de régénération proprement dite, une réinjection immédiate du carburant est demandée afin d'atténuer la température dans le filtre à particules GPF, en faisant passer une quantité minimum de gaz échappement : on continue de faire fonctionner le moteur à la même vitesse de rotation mais on ferme le boîtier-papillon.

L'avantage de l'injection de carburant est de diminuer de manière quasi instantanée la température, ce qui permet d'attendre l'atteinte de la température maximale de tenue thermomécanique pour la mettre en oeuvre (pas besoin de prendre une marge), mais cette injection entraîne une surconsommation de carburant du véhicule.

De plus la nécessité de procéder à des alternances parfois longues et répétées des séquences finit par épuiser l'énergie de la batterie de la machine électrique qui entraîne le moteur thermique en mode de pompe à air et de la machine électrique qui entraîne le véhicule pendant toute la durée du processus.

L'invention vise d'une manière générale à remédier à ces défauts des procédés de régénération active des filtres à particules GPF sur les motorisations hybrides.

Un autre but de l'invention est d'économiser du carburant et de limiter la dépense d'énergie de la ou des machines électriques.

### Exposé de l'invention

L'invention a pour objet un procédé de commande d'un groupe motopropulseur hybride muni d'un filtre à particules dans la ligne d'échappement comprenant les étapes suivantes :
- on détermine la température du filtre à particules et la masse de particules dans le filtre à particules, puis on déclenche la régénération du filtre à particules, puis lorsque la masse de particules atteint un seuil prédéterminé et lorsque la température dans le filtre à particules est supérieure ou égale à une température de seuil prédéterminée, on commande le débit d'air de sorte à être égal à un débit d'air maximal,
- on détermine la température du filtre à particules et la masse de particules puis on détermine si la température courante du filtre à particules est inférieure à une température de modulation,
- si tel est le cas, on maintient la consigne de débit d'air courante et le procédé reprend ensuite à la comparaison de la température courante du filtre à particules et de la température de modulation,
- si la température du filtre à particules est supérieure ou égale à la température de modulation, on module la consigne de débit d'air apporté au afin de freiner une montée trop rapide de la température interne du filtre à particules.

Pour moduler la température du filtre à particules, on réalise les étapes suivantes
- on réduit le débit d'air par palier jusqu'à atteindre le débit d'air minimum réalisable par le moteur,
- lorsque le débit minimum réalisable par le moteur est atteint, on détermine si la température du filtre à particules est inférieure ou égale à la température maximale du filtre à particules,
- si tel est le cas on détermine si la température du filtre à particules est inférieure ou égale à la température de modulation,
- si tel n'est pas le cas, on maintient le débit d'air minimum et le procédé reprend à l'étape de comparaison de la température du filtre à particules à la température maximale du filtre à particules,
- si tel est le cas, on définit une nouvelle consigne de débit d'air maximal supérieure à la consigne de débit d'air maximal en cours, et on commande le débit d'air admis pour atteindre cette nouvelle consigne de débit d'air maximal,
- le procédé reprenant alors à la comparaison de la température courante du filtre à particules et de la température de modulation.

Le groupe motopropulseur hybride pouvant comprendre un moteur à combustion interne muni d'un filtre à particules dans la ligne d'échappement, une machine électrique principale de traction et une machine électrique secondaire configurée pour entraîner le moteur à combustion interne, le procédé comprenant des étapes au cours desquelles on peut déclencher la régénération du filtre à particules en commandant le moteur à combustion interne en coupant l'injection de carburant, et en étant entraîné par la machine électrique secondaire à une vitesse de rotation donnée, et découplé des roues, le véhicule étant alors mû par la machine électrique principale, et en commandant la position d'un vanne-papillon commandant l'admission de gaz dans le moteur à combustion interne.

On peut commander le débit d'air admis dans le moteur à combustion interne en commandant le boitier-papillon.

On peut commander le débit d'air admis dans le moteur à combustion interne en commandant la vitesse de rotation du moteur à combustion interne par l'intermédiaire de la machine électrique secondaire en complément de la commande du boitier-papillon.

Lorsque le moteur à combustion interne est muni d'un circuit de recirculation partielle des gaz d'échappement à l'admission comprenant une vanne, on peut commander la fermeture de la vanne du circuit de recirculation partielle, de sorte que le boîtier-papillon ne règle qu'un débit d'air frais.

Lorsque la température du filtre à particules est descendue pour la première fois en dessous de la température de modulation par passage au débit d'air minimum, on peut réguler la température dans le filtre à particules en boucle fermée autour de la température de modulation.

La nouvelle consigne de débit maximal peut être plus faible que la consigne de débit maximal précédemment définie.

On peut mesurer la température du filtre à particules par un capteur ou on l'estime par un modèle à partir d'autres paramètres de fonctionnement du moteur.

On peut déterminer la masse de particules en fonction d'une mesure de pression différentielle entre l'entrée et la sortie du filtre à particules et en fonction d'une cartographie mémorisée reliant la masse au débit et à la pression différentielle.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- [Fig 1] illustre les principaux éléments d'un groupe motopropulseur commandé selon l'invention, et
- [Fig 2] illustre les principales étapes d'un procédé de commande.

### Description détaillée

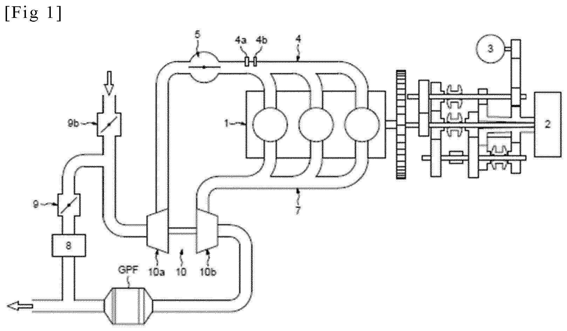

La figure 1 illustre un groupe motopropulseur hybride pour véhicule automobile tel que décrit en détail dans la publication FR3022495 au nom de la demanderesse.

Le groupe motopropulseur hybride comprend un moteur à combustion interne 1, associé à au moins une machine électrique principale référencée 2, dont l'arbre de sortie est coaxial à l'arbre de sortie du moteur à combustion interne 1 (en bout de vilebrequin du moteur). L'arbre de sortie de la machine électrique principale 2 est relié à la chaîne de transmission du véhicule. La machine électrique principale 2 peut donc entraîner le véhicule soit seule soit en combinaison avec le moteur à combustion interne 1 quand celui-ci fonctionne. Le moteur à combustion interne 1 peut être désaccouplé de la chaîne de transmission du véhicule.

Dans le mode de réalisation représenté, le moteur à combustion interne 1 est également associé à une deuxième machine électrique 3, dont l'arbre de sortie est parallèle à l'arbre de sortie du moteur à combustion interne 1. La deuxième machine électrique 3 est apte à entraîner le moteur à combustion interne 1 en rotation.

Le moteur à combustion interne 1 est muni classiquement d'une ligne d'admission d'air frais comprenant un collecteur d'admission 4 relié d'une part aux cylindres et d'autre part à un boîtier-papillon 5 permettant de régler la quantité d'air frais admis. Le boîtier-papillon 5 est connecté à l'admission d'air frais par l'intermédiaire d'au moins une conduite 6.

Le moteur à combustion interne 1 est muni d'une ligne d'échappement comprenant un collecteur d'échappement 7 relié d'une part aux cylindres et d'autre part à une mise à l'air libre. La ligne d'échappement comprend un filtre à particules référencé GPF. Le filtre à particules GPF est associé à un capteur de pression différentielle qui est apte à mesurer la différence de pression ΔP entre son entrée et sa sortie.

Le groupe motopropulseur hybride illustré par la figure 1 comprend également un système de recirculation partielle des gaz d'échappement à l'admission du moteur, dit circuit EGR (de l'acronyme anglais pour : Exhaust Gas Recycling), permettant de prélever une partie des gaz d'échappement dans la ligne d'échappement en aval du filtre à particules GPF et de le recycler dans la ligne d'admission après en avoir réduit la température par l'intermédiaire d'un échangeur thermique 8. Le circuit EGR est muni d'une vanne EGR 9 permettant de commander le débit de gaz recirculés.

Dans le mode de réalisation illustré par la figure 1, le moteur à combustion interne 1 est muni d'un turbocompresseur 10 dont la partie compresseur 10a est disposée dans la ligne d'admission d'air frais en amont du boîtier-papillon 5 de sorte à augmenter la pression d'alimentation du moteur à combustion interne 1 en air frais. La partie turbine 10b est disposée dans la ligne d'échappement de sorte à être entraînée par les gaz d'échappement. Le circuit EGR peut alors être à basse pression comme illustré sur la figure 1 si le circuit EGR est disposé en amont du compresseur 10a et en aval de la turbine 10b. Il peut être à haute pression si le circuit EGR est disposé en aval du compresseur 10a et en amont de la turbine 10b.

Compte tenu de la présence d'un tel circuit EGR, le boîtier-papillon 5 du moteur sert à régler le débit total des gaz d'admission du moteur, comprenant un débit d'air frais et un débit de gaz recyclés.

Le débit des gaz recyclés peut être réglé grâce à la vanne EGR 9, le débit d'air admis dans le moteur étant alors obtenu de manière indirecte, par différence. Dans une variante, on peut aussi régler directement le seul débit d'air en réglant la vanne d'admission 9b d'air du circuit d'admission, de sorte à obtenir une consigne de débit recherchée. Le débit des gaz recyclés est alors obtenu indirectement par différence entre le débit total et le débit d'air frais.

D'autres variantes sont possibles.

Le débit total des gaz admis dans le moteur est obtenu en réglant la valeur de la pression régnant dans le collecteur d'admission 4 du moteur à combustion interne 1, en tenant compte de la température et d'un modèle de remplissage.

Pour réaliser cela, on dispose d'un capteur de pression 4a et d'un capteur de température 4b dans le collecteur d'admission 4. On règle la pression en ajustant la position du boîtier-papillon 5.

Dans le cas non représenté où le moteur est dépourvu de circuit EGR, il n'y a généralement qu'un boîtier-papillon 5 pour régler le seul débit de gaz admis dans le moteur qui est le débit d'air frais. Il n'y a pas de vanne d'admission 9b d'air.

Dans le cadre de l'invention, un mode de réalisation comprend l'entraînement du moteur à combustion interne 1 comme une pompe à vide par la deuxième machine électrique 3, et l'entraînement du véhicule par la machine électrique principale 2. Cependant, en variante, le véhicule hybride peut ne disposer que d'une seule machine électrique, pourvu que celle-ci soit apte à entraîner à la fois le véhicule et le moteur à combustion interne 1. Une telle architecture est illustrée notamment dans le document FR-A1-3233495.

Le contrôle de la régénération du filtre à particules GPF est essentiel car il permet non seulement de diminuer la masse de particules fines stockée mais également de réduire la contre-pression dans la ligne d'échappement, dans le but de réduire les risques d'endommagement de certains composants du groupe motopropulseur tels que les soupapes d'échappement ou le turbocompresseur 10. D'autre part, le contrôle de la régénération du filtre à particules GPF est indispensable afin d'assurer la protection thermique du filtre à particules GPF lui-même tout en assurant une meilleure efficacité de régénération dans un délai raisonnable
La solution technique proposée est de surveiller l'évolution de la température interne du filtre à particules GPF ainsi que la masse de particules brûlée, afin d'adapter la quantité d'air (oxygène) à apporter pour la régénération, sans interrompre le processus de régénération dans un court délai à cause de la montée trop rapide de la température et sans avoir à réinjecter de carburant pour atténuer l'évolution de la température dans le filtre à particules GPF.

L'adaptation du débit d'air admis dans le filtre à particules GPF est réalisée en commandant la pression dans le collecteur d'admission 4 du moteur. La pression dans le collecteur d'admission est commandée à son tour en ajustant la position du boîtier-papillon 5. Quand le moteur est du type suralimenté comme c'est le cas sur la figure 1, on ferme en outre la vanne EGR 9, de sorte que le boîtier-papillon 5 ne règle effectivement qu'un débit d'air pur, le débit d'EGR étant nul.

En général, la vitesse de rotation du moteur est maintenue constante. On note cependant que dans une variante du procédé, la vitesse d'entrainement du moteur à combustion interne 1 peut être modulée en complément de l'ajustement de la position du boîtier-papillon, pour garantir dans toutes les conditions la réalisation du débit d'air. En effet, il est possible que dans certains cas, par exemple à haute altitude, en raison de la trop faible pression atmosphérique et de la densité d'air admis, même une ouverture complète du boîtier-papillon ne permette pas d'atteindre la pression dans le collecteur d'admission, et donc le débit d'air de consigne. Dans ce cas, une augmentation de la vitesse de rotation du moteur permet d'augmenter le débit.

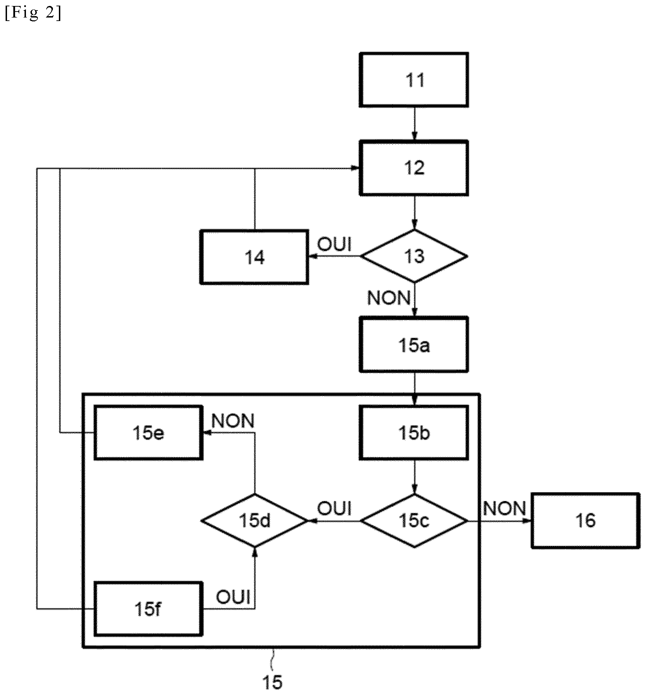

Le procédé de commande selon l'invention est illustré par la figure 2 et comprend les étapes suivantes.

Au cours d'une première étape 11, on déclenche la régénération du filtre à particules GPF (démarrage de la combustion des particules fines moteur (PM) dans le filtre à particules GPF), lorsque la masse de particules fines atteint un seuil prédéterminé et lorsque la température dans le filtre à particules GPF est supérieure ou égale à une température de seuil, notamment environ 650°C.

On commande alors le débit d'air de sorte à être égal à une valeur fixe constante dite débit d'air maximal. A l'issue de cette étape, la régénération du filtre à particules GPF débute et la température augmente au-dessus de la valeur initiale de 650°C.

Au cours d'une deuxième étape 12, on mesure la température du filtre à particules GPF par un capteur ou on l'estime par un modèle à partir d'autres paramètres de fonctionnement du moteur (vitesse de rotation, couple, etc.). On détermine le débit des gaz traversant le filtre à particules GPF et l'écart de pression, ou pression différentielle, à ses bornes Pdiff. On détermine la masse de particules PM en fonction de la pression différentielle Pdiff et en fonction d'une cartographie mémorisée reliant la masse de particules PM au débit et à la pression différentielle Pdiff. On peut considérer le débit traversant le filtre à particules GPF comme égal au débit gazeux admis dans le moteur en négligeant le débit massique du carburant.

Au cours d'une troisième étape 13, on détermine si la température courante du filtre à particules GPF Tcur_GPF est inférieure à la température de modulation Tmod_Qair du débit d'air. Il est à noter que la température de modulation Tmod_Qair est inférieure au seuil de température maximale autorisée dans le filtre à particules GPF Tmax_GPF.

Si tel est le cas, on maintient la consigne de débit d'air courante au cours d'une quatrième étape 14. Le procédé reprend ensuite à la deuxième étape 12.

Si la température courante du filtre à particules GPF est supérieure ou égale à la température de modulation Tmod_Qair, le procédé de commande se poursuit par une cinquième étape 15.

Au cours de la cinquième étape 15, on module la consigne de débit d'air apporté au GPF afin de freiner une montée trop rapide de la température interne du filtre à particules GPF et afin de continuer le processus de régénération le plus longtemps possible, ce qui suppose qu'on n'atteigne pas la température maximale du filtre à particules GPF autorisée.

Pour réaliser cela, au cours d'une première sous-étape 15a, on réduit le débit d'air par palier jusqu'à atteindre la consigne de débit minimum réalisable par le moteur Qmin. Chaque palier présente une durée et une amplitude prédéterminées. La consigne de débit minimum réalisable par le moteur Qmin correspond au débit obtenu lorsque la pression de collecteur d'admission est minimale, c'est-à-dire lorsque le boîtier-papillon 5 est fermé. A la différence des procédés de l'état de la technique, il n'y a pas de carburant injecté durant cette sous-étape. Pendant cette sous-étape, la température du filtre à particules GPF continue d'augmenter mais à un rythme réduit par rapport au rythme observé lorsque le débit est maximal. Lorsque le débit minimum réalisable par le moteur Qmin est atteint, le procédé se poursuit par une deuxième sous-étape 15b

Au cours de la deuxième sous-étape 15b, on maintient le débit d'air à la consigne de débit minimum Qmin tant que la température du filtre à particules GPF reste supérieure à la température de modulation Tmod_Qair.

Deux cas de figure peuvent alors apparaitre.
- Dans le cas d'une masse de particules PM assez importante, il est possible que la température du filtre à particules GPF continue d'augmenter. Dans ce cas, le maintien de la consigne de débit minimum réalisable sert à dégager le moins d'exotherme possible c'est-à-dire à freiner l'augmentation de température tout en continuant de brûler les particules, c'est-à-dire que cela prolonge la régénération. Celle-ci sera arrêtée avant que la masse de particules PM dans le filtre à particules GPF soit nulle si la température maximale Tmax_GPF autorisée est atteinte, ou pour d'autres raisons comme l'état de charge de la batterie, ou une requête de couple du conducteur du véhicule qui oblige à remettre en route le moteur à combustion interne 1, etc.
- En revanche, quand la masse de particules PM est plus faible (3g ou moins), la température du filtre à particules GPF va commencer à baisser jusqu'à repasser en dessous de la température de modulation Tmod_Qair. Cela s'explique par le fait que la combustion des PM produit un exotherme inférieur à la dissipation thermique par le débit d'air résiduel, ce qui a pour effet de refroidir le filtre à particules GPF. Dès que la température du filtre à particules GPF repasse en dessous de la température de modulation Tmod_Qair, on augmente la consigne de débit d'air vers une nouvelle consigne de débit maximal par incrémentation au pas d'une seconde. Avantageusement la nouvelle consigne de débit maximal peut être plus faible que la consigne de débit maximal précédemment définie.

En d'autres termes, une fois que la température du filtre à particules GPF a atteint pour la première fois la température de modulation Tmod_Qair, le procédé se poursuit après la sous-étape 15b comme suit.

Au cours d'une sous-étape 15c, on détermine si la température du filtre à particules GPF est inférieure ou égale à la température maximale du filtre à particules GPF Tmax_GPF.

Si tel n'est pas le cas, le procédé se poursuit à une sixième étape 16 au cours de laquelle on arrête la régénération.

Si la température du filtre à particules GPF est inférieure ou égale à la température maximale du filtre à particules GPF Tmax_GPF, le procédé se poursuit par une sous-étape 15d, au cours de laquelle on détermine si la température du filtre à particules GPF est inférieure ou égale à la température de modulation Tmod_Qair.

Si tel n'est pas le cas, on maintient le débit d'air minimum au cours d'une sous-étape 15e. Le procédé reprend alors à la deuxième étape 12.

Si tel est le cas, on définit une nouvelle consigne de débit d'air maximal supérieure à la consigne de débit d'air maximal en cours et on commande le débit d'air admis pour atteindre cette nouvelle consigne de débit d'air maximal lors d'une sous-étape 15f. Le procédé reprend alors à la deuxième étape 12.

Dans une variante de réalisation non représentée, on prévoit, à partir du moment où la température du GPF est descendue pour la première fois en dessous de la température de modulation Tmod_Qair par passage au débit minimum, de régler la température en boucle fermée autour de la température de modulation Tmod_Qair. On utilise alors un régulateur PID avec lequel on ajuste le débit pour ramener la différence entre température réelle et consigne à zéro.

Les différentes valeurs sont mesurées périodiquement, au moins après chaque durée d'échantillonnage. Les étapes 12 à 15f sont alors répétées séquentiellement à chaque fois qu'une nouvelle valeur est disponible, ou selon un pas de temps de calcul prédéfini.

## Revendications

1. Procédé de commande d'un groupe motopropulseur hybride muni d'un filtre à particules (GPF) dans la ligne d'échappement, comprenant les étapes suivantes :
• on détermine la température du filtre à particules (GPF) et la masse de particules dans le filtre à particules, puis on déclenche la régénération du filtre à particules (GPF), lorsque la masse de particules atteint un seuil prédéterminé et lorsque la température dans le filtre à particules (GPF) est supérieure ou égale à une température de seuil prédéterminée, on commande le débit d'air admis dans le moteur de sorte à être égal à un débit d'air maximal,
• on détermine la température du filtre à particules (GPF) et la masse de particules puis on détermine si la température courante du filtre à particules est inférieure à une température de modulation,
• si tel est le cas, on maintient la consigne de débit d'air courante et le procédé reprend ensuite à la comparaison de la température courante du filtre à particules (GPF) et de la température de modulation,
• si la température du filtre à particules (GPF) est supérieure ou égale à la température de modulation, on module la consigne de débit d'air apporté au (GPF) afin de freiner une montée trop rapide de la température interne du filtre à particules (GPF),
**CARACTERISE EN CE QUE**, pour moduler la température du filtre à particules (GPF), on réalise les étapes suivantes :
• on réduit le débit d'air par palier jusqu'à atteindre le débit d'air minimum réalisable par le moteur,
• lorsque le débit minimum réalisable par le moteur est atteint, on détermine si la température du filtre à particules (GPF) est inférieure ou égale à la température maximale du filtre à particules (GPF),
• si tel est le cas on détermine si la température du filtre à particules (GPF) est inférieure ou égale à la température de modulation,
• si tel n'est pas le cas, on maintient le débit d'air minimum et le procédé reprend à l'étape de comparaison de la température du filtre à particules (GPF) à la température maximale du filtre à particules (GPF),
• si tel est le cas, on définit une nouvelle consigne de débit d'air maximal supérieure à la consigne de débit d'air maximal en cours, et on commande le débit d'air admis pour atteindre cette nouvelle consigne de débit d'air maximal,
• le procédé reprenant alors à la comparaison de la température courante du filtre à particules (GPF) et de la température de modulation.

2. Procédé de commande selon la revendication 1, dans lequel le groupe motopropulseur hybride comprend un moteur à combustion interne (1) muni d'un filtre à particules (GPF) dans la ligne d'échappement, une machine électrique principale (2) de traction et une machine électrique secondaire (3) configurée pour entraîner le moteur à combustion interne (1), le procédé comprend des étapes au cours desquelles on déclenche la régénération du filtre à particules (GPF) en commandant le moteur à combustion interne (1) en coupant l'injection de carburant, et en étant entraîné par la machine électrique secondaire (3) à une vitesse de rotation donnée, et découplé des roues, le véhicule étant alors mû par la machine électrique principale (2), et en commandant la position d'un boîtier-papillon (5) commandant l'admission de gaz dans le moteur à combustion interne (1).

3. Procédé de commande selon l'une quelconque des revendications précédentes, dans lequel on commande le débit d'air admis dans le moteur à combustion interne (1) en commandant le boitier-papillon (5).

4. Procédé de commande selon la revendication 3, dans lequel on commande le débit d'air admis dans le moteur à combustion interne (1) en commandant la vitesse de rotation du moteur à combustion interne (1) par l'intermédiaire de la machine électrique secondaire (3) en complément de la commande du boitier-papillon (5).

5. Procédé de commande selon l'une quelconque des revendications précédentes, dans lequel, lorsque le moteur à combustion interne est muni d'un circuit de recirculation partielle des gaz d'échappement à l'admission comprenant une vanne (9), on commande la fermeture de la vanne (9) dudit circuit, de sorte que le boîtier-papillon (5) ne règle qu'un débit d'air frais.

6. Procédé de commande selon l'une quelconque des revendications précédentes, dans lequel lorsque la température du filtre à particules (GPF) est descendue pour la première fois en dessous de la température de modulation par passage au débit d'air minimum, on régule la température dans le filtre à particules (GPF) en boucle fermée autour de la température de modulation.

7. Procédé de commande selon l'une quelconque des revendications précédentes, dans lequel la nouvelle consigne de débit maximal est plus faible que la consigne de débit maximal précédemment définie.

8. Procédé de commande selon l'une quelconque des revendications précédentes, dans lequel on mesure la température du filtre à particules (GPF) par un capteur ou on l'estime par un modèle à partir d'autres paramètres de fonctionnement du moteur.

9. Procédé de commande selon l'une quelconque des revendications précédentes, dans lequel on détermine la masse de particules en fonction d'une mesure de pression différentielle entre l'entrée et la sortie du filtre à particules (GPF) et en fonction d'une cartographie mémorisée reliant la masse au débit et à la pression différentielle.

## Patentansprüche

1. Verfahren zur Steuerung eines Hybrid-Antriebsstrangs, der mit einem Partikelfilter (GPF) in der Abgasleitung versehen ist, umfassend die folgenden Schritte:
• man bestimmt die Temperatur des Partikelfilters (GPF) und die Partikelmasse in dem Partikelfilter, dann löst man die Regenerierung des Partikelfilters (GPF) aus, wenn die Partikelmasse einen vorbestimmten Schwellenwert erreicht und wenn die Temperatur in dem Partikelfilter (GPF) größer oder gleich einer vorbestimmten Schwellentemperatur ist, steuert man den in den Motor eingelassenen Luftdurchsatz, so dass er gleich einem Höchstluftdurchsatz ist,
• man bestimmt die Temperatur des Partikelfilters (GPF) und die Partikelmasse und bestimmt dann, ob die aktuelle Temperatur des Partikelfilters kleiner als eine Modulationstemperatur ist,
• wenn dies der Fall ist, hält man den aktuellen Soll-Luftdurchsatz aufrecht und das Verfahren nimmt dann den Vergleich der aktuellen Temperatur des Partikelfilters (GPF) mit der Modulationstemperatur wieder auf,
• wenn die Temperatur des Partikelfilters (GPF) größer oder gleich der Modulationstemperatur ist, moduliert man den dem (GPF) zugeführten Soll-Luftdurchsatz, um einen zu schnellen Anstieg der Innentemperatur des Partikelfilters (GPF) zu bremsen, **dadurch gekennzeichnet, dass** man, um die Temperatur des Partikelfilters (GPF) zu modulieren, die folgenden Schritte ausführt:
• man reduziert den Luftdurchsatz stufenweise, bis man den vom Motor ausführbaren Mindestluftdurchsatz erreicht,
• wenn der vom Motor ausführbare Mindestdurchsatz erreicht ist, bestimmt man, ob die Temperatur des Partikelfilters (GPF) kleiner oder gleich der maximalen Temperatur des Partikelfilters (GPF) ist,
• wenn dies der Fall ist, bestimmt man, ob die Temperatur des Partikelfilters (GPF) kleiner oder gleich der Modulationstemperatur ist,
• wenn dies nicht der Fall ist, hält man den Mindestluftdurchsatz aufrecht und das Verfahren nimmt den Schritt des Vergleichens der Temperatur des Partikelfilters (GPF) mit der maximalen Temperatur des Partikelfilters (GPF) wieder auf,
• wenn dies der Fall ist, definiert man einen neuen Sollwert für den Höchstluftdurchsatz, der größer ist als der aktuelle Sollwert für den Höchstdurchsatz, und man steuert den eingelassenen Luftdurchsatz, um diesen neuen Sollwert für den Höchstluftdurchsatz zu erreichen,
• wobei das Verfahren dann den Vergleich der aktuellen Temperatur des Partikelfilters (GPF) und der Modulationstemperatur wieder aufnimmt.

2. Steuerverfahren nach Anspruch 1, wobei der Hybrid-Antriebsstrang einen Verbrennungsmotor (1) mit einem Partikelfilter (GPF) in der Abgasleitung, eine elektrische Haupttraktionsmaschine (2) und eine sekundäre elektrische Maschine (3) umfasst, die dazu konfiguriert ist, den Verbrennungsmotor (1) anzutreiben, wobei das Verfahren Schritte umfasst, in denen man die Regenerierung des Partikelfilters (GPF) auslöst, indem man den Verbrennungsmotor (1) durch Abschneiden der Kraftstoffeinspritzung steuert und dadurch, dass man von der sekundären elektrischen Maschine (3) mit einer gegebenen Drehgeschwindigkeit angetrieben wird und von den Rädern abgekoppelt ist, wobei das Fahrzeug dann von der elektrischen Hauptmaschine (2) angetrieben wird, und dadurch, dass man die Position eines Drosselklappengehäuses (5) steuert, das den Gaseinlass in den Verbrennungsmotor (1) steuert.

3. Steuerverfahren nach einem der vorstehenden Ansprüche, wobei man den Luftdurchsatz, der in den Verbrennungsmotor (1) eingelassen wird, durch Steuern des Drosselklappengehäuses (5) steuert.

4. Steuerverfahren nach Anspruch 3, wobei man den Luftdurchsatz, der in den Verbrennungsmotor (1) eingelassen wird, durch Steuern der Drehgeschwindigkeit des Verbrennungsmotors (1) über die sekundäre elektrische Maschine (3) in Ergänzung zur Steuerung des Drosselklappengehäuses (5) steuert.

5. Steuerverfahren nach einem der vorstehenden Ansprüche, wobei, wenn der Verbrennungsmotor mit einem Kreislauf zur teilweisen Abgasrückführung am Einlass versehen ist, der ein Ventil (9) umfasst, man das Schließen des Ventils (9) des Kreislaufs so steuert, dass das Drosselklappengehäuse (5) nur einen Luftdurchsatz von Frischluft regelt.

6. Steuerverfahren nach einem der vorstehenden Ansprüche, wobei, wenn die Temperatur des Partikelfilters (GPF) durch Durchlaufen des Mindestluftdurchsatzes zum ersten Mal unter die Modulationstemperatur gesunken ist, man die Temperatur im Partikelfilter (GPF) in einem geschlossenen Regelkreis um die Modulationstemperatur herum regelt.

7. Steuerverfahren nach einem der vorstehenden Ansprüche, wobei der neue Sollwert für den Höchstdurchsatz kleiner ist als der zuvor definierte Sollwert für den Höchstdurchsatz.

8. Steuerverfahren nach einem der vorstehenden Ansprüche, wobei man die Temperatur des Partikelfilters (GPF) durch einen Sensor misst oder wobei man sie durch ein Modell anhand von anderen Betriebsparametern des Motors schätzt.

9. Steuerverfahren nach einem der vorstehenden Ansprüche, wobei man die Partikelmasse in Abhängigkeit von einer Messung des Differentialdrucks zwischen dem Eingang und dem Ausgang des Partikelfilters (GPF) und in Abhängigkeit von einer gespeicherten Kartographie, welche die Masse mit dem Durchsatz und dem Differentialdruck verbindet, bestimmt.

## Claims

1. A method for controlling a hybrid powertrain equipped with a particulate filter (GPF) in the exhaust line, comprising the following steps:
• determining the temperature of the particulate filter (GPF) and the particulate mass in the particulate filter, then triggering the regeneration of the particulate filter (GPF), when the particulate mass reaches a predetermined threshold and when the temperature in the particulate filter (GPF) is greater than or equal to a predetermined threshold temperature, the air flow admitted into the engine is controlled so as to be equal to a maximum air flow,
• determining the temperature of the particulate filter (GPF) and the particle mass, and then determining whether the current temperature of the particulate filter is below a modulation temperature,
• if this is the case, maintaining the current airflow setpoint and then resuming the process with a comparison of the current temperature of the particulate filter (GPF) and the modulation temperature,
• if the temperature of the particulate filter (GPF) is greater than or equal to the modulation temperature, modulating the airflow setpoint supplied to the (GPF) in order to slow down too rapid a rise in the internal temperature of the particulate filter (GPF),
**CHARACTERIZED IN THAT,** in order to modulate the temperature of the particulate filter (GPF), the following steps are carried out:
• reducing the air flow in stages until the minimum air flow achievable by the engine is reached,
• when the minimum flow rate achievable by the engine is reached, it is determined whether the temperature of the particulate filter (GPF) is less than or equal to the maximum temperature of the particulate filter (GPF),
• if this is the case, determining whether the temperature of the particulate filter (GPF) is less than or equal to the modulation temperature,
• if it is not, maintaining the minimum air flow and resuming the process with the step of comparing the temperature of the particulate filter (GPF) with the maximum temperature of the particulate filter (GPF),
• if this is the case, defining a new maximum airflow setpoint, which is higher than the current maximum airflow setpoint, and controlling the intake airflow to reach this new maximum airflow setpoint,
• the process then resuming with a comparison of the current temperature of the particulate filter (GPF) and the modulation temperature.

2. The control method according to claim 1, wherein the hybrid powertrain comprises an internal combustion engine (1) provided with a particulate filter (GPF) in the exhaust line, a main electric traction machine (2) and a secondary electric machine (3) configured to drive the internal combustion engine (1), the method comprises steps during which the regeneration of the particulate filter (GPF) is initiated by controlling the internal combustion engine (1) by cutting off fuel injection, and by being driven by the secondary electric machine (3) at a given rotational speed, and decoupled from the wheels, the vehicle then being driven by the main electric machine (2), and by controlling the position of a throttle body (5) controlling the intake of gas into the internal combustion engine (1).

3. The control method according to any of the preceding claims, wherein the flow of air admitted into the internal combustion engine (1) is controlled by controlling the throttle body (5).

4. The control method according to claim 3, wherein the flow of air admitted to the internal combustion engine (1) is controlled by controlling the speed of rotation of the internal combustion engine (1) via the secondary electric machine (3) in addition to controlling the throttle body (5).

5. The control method according to any one of the preceding claims, wherein, when the internal combustion engine is provided with an intake partial exhaust gas recirculation circuit comprising a valve (9), the closure of the valve (9) of said circuit is controlled, such that the throttle body (5) regulates only a fresh air flow.

6. The control method according to any of the preceding claims, wherein when the temperature of the particulate filter (GPF) has fallen below the modulation temperature for the first time by switching to the minimum air flow, the temperature in the particulate filter (GPF) is regulated in a closed loop around the modulation temperature.

7. The control method according to any of the preceding claims, wherein the new maximum airflow setpoint is lower than the previously defined maximum airflow setpoint.

8. The control method according to any of the preceding claims, wherein the temperature of the particulate filter (GPF) is measured by a sensor or estimated by a model from other operating parameters of the engine.

9. The control method according to any of the preceding claims, wherein the mass of particles is determined as a function of a differential pressure measurement between the inlet and outlet of the particulate filter (GPF) and as a function of a stored map linking the mass to the airflow and to the differential pressure.
